Europäisches Patentamt

European Patent Office

Office européen des brevets

(19)

(11) **EP 1 345 354 A1**

(12) **EUROPÄISCHE PATENTANMELDUNG**

(43) Veröffentlichungstag:
    **17.09.2003 Patentblatt 2003/38**

(51) Int Cl.⁷: **H04L 12/24**, H04L 12/26

(21) Anmeldenummer: **02360085.1**

(22) Anmeldetag: **13.03.2002**

(84) Benannte Vertragsstaaten:
    **AT BE CH CY DE DK ES FI FR GB GR IE IT LI LU MC NL PT SE TR**
    Benannte Erstreckungsstaaten:
    **AL LT LV MK RO SI**

(71) Anmelder: **ALCATEL**
    **75008 Paris (FR)**

(72) Erfinder: **Grammel, Gert**
    **73066 Uhingen (DE)**

(74) Vertreter: **Schäfer, Wolfgang**
    **Dreiss Fuhlendorf, Steimle & Becker,**
    **Gerokstrasse 1,**
    **Postfach 10 37 62**
    **70032 Stuttgart (DE)**

(54) **Elektrisches Netzwerk zur Datenübertragung**

(57)    Es wird ein elektrisches Netzwerk zur Datenübertragung beschrieben. Bei dem Netzwerk werden Daten über eine erste Verbindung (S-N1) dem Netzwerk zugeführt und über eine zweite Verbindung (N1-N2) durch das Netzwerk hindurchgeführt. Bei dem Netzwerk weist die erste Verbindung (S-N1) eine erste Übertragungskapazität und die zweite Verbindung (N1-N2) eine zweite Übertragungskapazität auf, wobei die erste Übertragungskapazität größer ist als die zweite Übertragungskapazität. Es sind Mittel vorgesehen zur Ermittlung eines Kriteriums für einen sogenannten QoS (QoS = quality of service) des Netzwerks in Abhängigkeit von der Dauer (P2, P3) von Pausen pro Zeiteinheit bei der Übertragung der Daten über die erste Verbindung (S-N1).

**Fig. 2**

**Beschreibung**

Stand der Technik

Die Erfindung geht aus von einem Verfahren zur Ermittlung eines Kriteriums für einen sogenannten QoS (QoS = quality of service) eines elektrischen Netzwerks zur Datenübertragung, bei dem Daten über eine erste Verbindung dem Netzwerk zugeführt und über eine zweite Verbindung durch das Netzwerk hindurchgeführt werden, und bei dem die erste Verbindung eine erste Übertragungskapazität und die zweite Verbindung eine zweite Übertragungskapazität aufweist, wobei die erste Übertragungskapazität größer ist als die zweite Übertragungskapazität. Die Erfindung betrifft ebenfalls ein entsprechendes elektrisches Netzwerk zur Datenübertragung.

Unter dem "QoS = quality of Service" eines Netzwerks wird üblicherweise dessen Zuverlässigkeit, Verfügbarkeit oder Fehlerhäufigkeit verstanden. Dieser QoS muß auf irgendeine Art und Weise für ein zu beurteilendes Netzwerk ermittelt werden.

Hierzu ist es bekannt, als Kriterium für den QoS eines Netzwerks beispielsweise die Anzahl derjenigen Daten heranzuziehen, die bei der Übertragung über das Netzwerk verlorengegangen sind. Häufig wird von dem Betreiber eines Netzwerks jedoch garantiert, dass keine Daten bei der Übertragung verloren gehen. Zu diesem Zweck ist es möglich, dass der Zufluß von Daten zu einem Eingang des Netzwerks begrenzt wird. Dies führt zu Verzögerungen bei der Datenübertragung über das Netzwerk. In diesem Fall kann ein Kriterium für den QoS des Netzwerks z.B. in der Verzögerung von Daten durch die Übertragung über das Netzwerk bestehen.

Auf der Grundlage dieses wie auch immer ermittelten QoS des Netzwerks werden häufig die Gebühren für die Benutzung des Netzwerks festgelegt. So ist es möglich, dass der Betreiber des Netzwerks einen bestimmten QoS garantiert, also beispielsweise die fehlerfreie Übertragung der Daten mit einer maximalen Verzögerung. Für diesen garantierten QoS bezahlt der Benutzer des Netzwerks eine bestimmte Grundgebühr. Wird dieser QoS jedoch von dem Netzwerk z.B. aufgrund von Fehlern in dem Netzwerk zeitweise nicht erreicht, so gewährt der Betreiber des Netzwerks für diesen verminderten QoS eine Entschädigung. Dabei kann es sich beispielsweise um eine zumindest teilweise Rückzahlung der Grundgebühr oder sonstige Art einer Gutschrift an den Benutzer des Netzwerks handeln.

Aufgabe und Vorteile der Erfindung

Aufgabe der Erfindung ist es, ein Verfahren zur Ermittlung eines Kriteriums für einen derartigen QoS zu schaffen, das für den Betreiber des Netzwerks möglichst einfach ausführbar und für den Benutzer des Netzwerks nachvollziehbar ist.

Diese Aufgabe wird bei einem Verfahren der eingangs genannte Art erfindungsgemäß dadurch gelöst, dass das Kriterium für den QoS des Netzwerks in Abhängigkeit von der Dauer von Pausen pro Zeiteinheit bei der Übertragung der Daten über die erste Verbindung ermittelt wird. Bei einem Netzwerk der eingangs genannten Art wird die Aufgabe erfindungsgemäß entsprechend gelöst.

Die Dauer von Pausen pro Zeiteinheit bei der Übertragung der Daten über die erste Verbindung können von dem Betreiber des Netzwerks sehr einfach erfaßt werden. Beispielsweise ist es möglich, dass der Betreiber diese Pausendauer an dem jeweils relevanten Eingang des Netzwerks mißt. Je länger die Pausendauer ist, weniger Daten werden über das Netzwerk übertragen und desto geringer ist der QoS des Netzwerks. Wird der QoS geringer als z.B. der von dem Betreiber garantierte QoS, so ist die erwähnte Entschädigung von dem Betreiber an den Benutzer des Netzwerks zu bezahlen.

Für den Benutzer des Netzwerks ist die Pausendauer ein verständliches Maß für den QoS des Netzwerks. Diese Pausendauer kann der Benutzer - zumindest in extremen Fällen - sogar unmittelbar an der Übertragungsdauer seiner Daten nachvollziehen. Weiterhin ist es für den Benutzer akzeptabel, dass er nur dann eine Entschädigung erwarten kann, wenn seine Daten bei der Übertragung über das Netzwerk z.B. über den garantierten QoS hinaus verzögert worden sind.

Bei einer vorteilhaften Weiterbildung der Erfindung handelt es sich bei der zweiten Übertragungskapazität um eine maximale Übertragungskapazität der zweiten Verbindung, deren zugehöriger QoS von dem Betreiber des Netzwerks den Benutzern desselben garantiert wird. Die zugehörige Dauer von Pausen pro Zeiteinheit wird bei dieser zweiten maximalen Übertragungskapazität vorzugsweise wie folgt berechnet: $P2 = (1 - RN/RS) \times T$ mit $RN$ = maximale Übertragungskapazität der Verbindung N1-N2, $RS$ = maximale Übertragungskapazität der Verbindung S-N1, $T$ = Zeiteinheit.

Bei einer weiteren vorteilhaften Weiterbildung der Erfindung handelt es sich bei der zweiten Übertragungskapazität um eine verminderte Übertragungskapazität der zweiten Verbindung, deren zugehöriger QoS kleiner ist als der garantierte QoS. Die zugehörige Dauer von Pausen pro Zeiteinheit wird bei dieser zweiten verminderten Übertragungskapazität vorzugsweise gemessen.

Bei einer vorteilhaften Ausgestaltung der Erfindung wird von dem Betreiber des Netzwerks bei Vorliegen des kleineren QoS eine Entschädigung an den Benutzer des Netzwerks bezahlt. Dabei ist die Entschädigung vorzugsweise abhängig von der gemessenen Dauer von Pausen pro Zeiteinheit oder von der Differenz der gemessenen Dauer und der berechneten Dauer.

Besonders vorteilhaft ist es, wenn die Dauer von Pausen pro Zeiteinheit zwischen aufeinanderfolgenden Pakten ermittelt wird. Die Pausen treten also nur zwischen zwei aufeinanderfolgenden Paketen der übertragenen Daten auf. Weiterhin ist es besonders vorteilhaft, wenn die Dauer von Pausen pro Zeiteinheit gemittelt wird. Damit kann der Bezug auf eine Zeiteinheit ausgeglichen werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Ausführungsbeispiele der Erfindung

Figur 1 zeigt ein schematisches Blockdiagramm eines Ausführungsbeispiels eines erfindungsgemäßen elektrischen Netzwerks zur Datenübertragung und

Figur 2 zeigt zwei schematische Zeitdiagramme von Datenübertragungen über das Netzwerk der Figur 1.

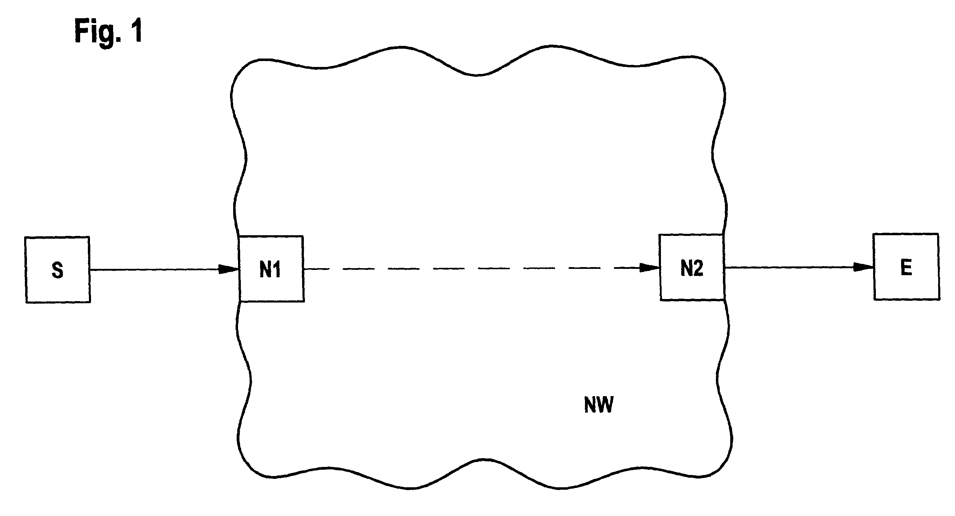

In der Figur 1 ist ein elektrisches Netzwerk NW zur Datenübertragung dargestellt, beispielsweise das Internet. Das Netzwerk NW ist dazu vorgesehen, Daten von einem Sender S an einen Empfänger E zu übertragen. Hierzu werden die Daten zuerst von dem Sender S an einen Eingang N1 des Netzwerks NW, dann innerhalb des Netzwerks NW von dem Eingang N1 an einen Ausgang N2 und schließlich von dem Ausgang N2 des Netzwerks NW an den Empfänger E übertragen.

Die Datenübertragung von dem Sender S an den Empfänger E und insbesondere die Datenübertragung innerhalb des Netzwerks NW erfolgt in der Form von Paketen.

Das Netzwerk NW besitzt eine maximale Übertragungskapazität für die Übertragung von Paketen von dem Eingang N1 an den Ausgang N2. Sofern das Netzwerk NW diese maximale Übertragungskapazität erreicht, so sind Mechanismen vorhanden, die den Zustrom von weiteren Paketen über den Eingang N1 in das Netzwerk NW pro Zeiteinheit begrenzen. Eine Überschreitung der maximalen Übertragungskapazität des Netzwerks NW und damit verbundene Fehlfunktionen werden somit vermieden. Auf diese Weise garantiert das Netzwerk NW, dass zwischen dem Eingang N1 und dem Ausgang N2 und damit innerhalb des Netzwerks NW keine Pakete verloren gehen.

Diese Mechanismen beruhen ganz allgemein darauf, dass der Eingang N1 in Abhängigkeit von der Füllung seines Datenpuffers den Sender S auffordert, eine Pause bei der Datenübertragung einzulegen. Erst nach Ablauf dieser Pause sendet der Sender S neue Daten an den Eingang N1. Die Dauer der Pause ist damit sowohl dem Eingang N1, als auch dem Sender S bekannt.

Beispielsweise ist es möglich, dass der Sender S drei Pakete ohne Pause senden will. Der Eingang N1 empfängt das erste Paket und sendet es sofort weiter. Der Eingang N1 empfängt das zweite Paket, muss es aber zwischenspeichern, da er das erste Paket noch sendet. Die vorstehend genannten Mechanismen können nun darin bestehen, dass der Eingang N1 eine Pausenanforderung an den Sender S schickt, um zu vermeiden, dass ein Überlauf seines Datenpuffers und damit ein Datenverlust entsteht. Der Sender S wartet daraufhin die Pausendauer ab. Währenddessen schließt der Eingang N1 die Weiterleitung des ersten und zweiten Pakets ab. Der Sender S sendet nunmehr das dritte Paket, das dann von dem Eingang N1 empfangen und sofort weitergeleitet wird.

In einem ersten Fall besitzt die Verbindung von dem Sender S zu dem Eingang N1 eine geringere oder höchstens dieselbe Übertragungskapazität wie die Verbindung von dem Eingang N1 zu dem Ausgang N2. Die erstgenannte Verbindung wird nachfolgend als Verbindung S-N1 und die zweitgenannte Verbindung als Verbindung N1-N2 bezeichnet. In diesem Fall sind die Mechanismen zur Begrenzung des Zustroms von Paketen in das Netzwerk NW an sich nicht erforderlich.

In einem zweiten Fall besitzt die Verbindung S-N1 jedoch eine größere Übertragungskapazität als die Verbindung N1-N2. Dies bedeutet, dass die Verbindung N1-N2 eine Engstelle der Übertragung der Pakete von dem Sender S an den Empfänger E darstellen kann. In diesem Fall greifen die beschriebenen Mechanismen ein.

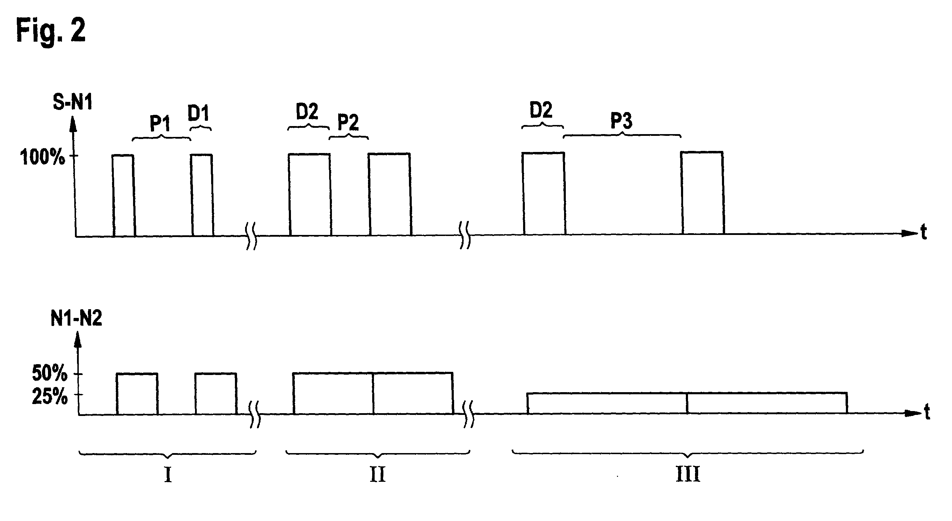

In der Figur 2 sind Übertragungen von Paketen über die Verbindung S-N1 und über die Verbindung N1-N2 über der Zeit t aufgetragen. Die Übertragungskapazität der Verbindung S-N1 ist 100%, während die Übertragungskapazität der Verbindung N1-N2 nur 50% ist. Dies hat zur Folge, dass dieselbe Übertragung über die Verbindung N1-N2 genau doppelt so lange dauert wie über die Verbindung S-N1.

In einem Bereich I der Figur 2 sind zwei aufeinanderfolgende Übertragungen von Paketen über die Verbindungen S-N1 und N1-N2 dargestellt. Jede der beiden Übertragungen über die Verbindung S-N1 hat eine Dauer D1. Zwischen diesen beiden Übertragungen über die Verbindung S-N1 ist eine Pause mit einer Dauer P1 vorhanden. Die Pause ist eine Folge der beschriebenen Mechanismen.

Die Dauer P1 der Pause ist in dem Bereich I größer als die Dauer D1 der ersten Übertragung über die Verbindung S-N1. Die für diese erste Übertragung auf der Verbindung N1-N2 erforderliche doppelte Übertragungsdauer erstreckt sich somit nicht über die Dauer P1 der vorgenannten Pause hinaus.

In einem Bereich II der Figur 2 sind zwei andere aufeinanderfolgende Übertragungen von Paketen über die Verbindungen S-N1 und N1-N2 dargestellt. Jede der beiden Übertragungen über die Verbindung S-N1 hat eine Dauer D2. Zwischen diesen beiden Übertragungen über die Verbindung S-N1 ist eine Pause mit einer Dauer P2 vorhanden. Die Pause resultiert wiederum aus den beschriebenen Mechanismen.

Die Dauer P2 der Pause entspricht in dem Bereich II der Dauer D2 der ersten Übertragung über die Verbindung S-N1. Die für diese erste Übertragung auf der Verbindung N1-N2 erforderliche doppelte Übertragungsdauer erstreckt sich somit exakt bis zum Ende der Dauer P2 der vorgenannten Pause. Der Bereich II stellt somit einen Grenzfall für Übertragungen von Paketen von dem Sender S an den Ausgang N2 dar.

Sobald über die Verbindung S-N1 mehr Pakete pro Zeiteinheit übertragen werden sollen, was an sich aufgrund der größeren Übertragungskapazität der Verbindung S-N1 möglich wäre, greifen die bereits erwähnten Mechanismen zur Begrenzung des Zustroms von Paketen in den Eingang N1 des Netzwerks NW erneut ein. Dies bedeutet, dass die Anzahl von übertragenen Paketen über die Verbindung S-N1 derart beeinflußt wird, dass der vorstehend beschriebene Grenzfall für Übertragungen von Paketen von dem Sender S an den Ausgang N2 nie überschritten wird.

Für diesen Grenzfall gilt allgemein:

$$D2 = RN/RS \times T$$

$$P2 = (1 - RN/RS) \times T$$

mit
RN = maximale Übertragungskapazität der Verbindung N1-N2,
RS = maximale Übertragungskapazität der Verbindung S-N1,
T = Zeiteinheit.

Die maximalen Übertragungskapazitäten RN und RS sind bekannt. Die Zeiteinheit T kann vorgegeben werden. Damit kann für den beschriebenen Grenzfall die Dauer P2 der Pausen zwischen den Übertragungen über die Verbindung S-N1 berechnet werden.

Diese berechnete Dauer P2 der Pausen pro Zeiteinheit T für den vorgenannten Grenzfall wird als Kriterium für einen sogenannten QoS (= quality of service) von dem Netzwerk NW garantiert. Dies bedeutet, dass der Betreiber des Netzwerks NW jedem Benutzer des Netzwerks NW garantiert, dass die Daten des Benutzers unter Einhaltung dieses Kriteriums über das Netzwerk NW übertragen werden, dass also maximal Pausen mit der Dauer P2 pro Zeiteinheit T während der Übertragung der Daten des Benutzers auftreten.

Im Betrieb des beschriebenen Netzwerks NW kann in dem Eingang N1 und/oder in dem Sender S die Dauer P2 der Pausen pro Zeiteinheit T gemessen werden. Wie beschrieben wurde, fordert der Eingang N1 die Pausen bei dem Sender S an. Der Sender S kann daher die Pausenanforderungen protokollieren und damit die Pausen pro Zeiteinheit T erfassen.

Solange kein Fehler innerhalb des Netzwerks NW vorhanden ist, ist die gemessene Dauer P2 der Pausen pro Zeiteinheit T nie größer als die berechnete Dauer P2. Dies bedeutet, dass der vorgenannte garantierte QoS von dem Netzwerk NW erreicht wird.

Liegt jedoch innerhalb des Netzwerks NW ein Fehler vor, so hat dies zur Folge, dass die maximale Übertragungskapazität der Verbindung N1-N2 geringer wird.

Dies ist in dem Bereich III der Figur 2 dargestellt. Dort ist die Übertragungskapazität der Verbindung N1-N2 im Vergleich zu der Übertragungskapazität der Verbindung S-N1 auf 25% gefallen.

In dem Bereich III der Figur 2 sind zwei andere aufeinanderfolgende Übertragungen von Paketen über die Verbindungen S-N1 und N1-N2 dargestellt. Jede der beiden Übertragungen über die Verbindung S-N1 hat eine Dauer D2. Zwischen diesen beiden Übertragungen über die Verbindung S-N1 ist eine Pause mit einer Dauer P3 vorhanden. Die Pause ist eine Folge der beschriebenen Mechanismen.

Die erste Übertragung über die Verbindung S-N1, die dort die Dauer D2 erfordert, benötigt über die Verbindung N1-N2 die vierfache Dauer. Würde nunmehr die nächste Übertragung über die Verbindung S-N1 bereits nach einer Pause mit der Dauer P2 erfolgen, wie dies in dem Bereich II für den Grenzfall beschrieben ist, so könnten diese Pakete nicht sofort über die Verbindung N1-N2 weiter übertragen werden. Dies würde zu Verlusten von Paketen führen. Aus diesem Grund greifen in diesem Fall - wie gesagt - die beschriebenen Mechanismen zur Begrenzung des Zustroms von Paketen in den Eingang N1 ein.

Die genannten Mechanismen führen dazu, dass in dem Bereich III zwischen den beiden Übertragungen über die Verbindung S-N1 eine längere Pause, und zwar mit der Dauer P3 vorhanden ist. Die Dauer P3 ist dabei dreifach so groß wie die Dauer D2 der ersten Übertragung über die Verbindung S-N1. Diese im Vergleich zu der Dauer P2 des Bereichs II wesentlich längere Dauer P3 der Pause des Bereichs III stellt die genannte Begrenzung des Zustroms von Paketen in den Eingang N1 dar.

Durch die beschriebene Pause mit der Dauer P3 wird in dem Bereich III erreicht, dass die im Vergleich zu dem Bereich II verminderte Übertragungskapazität über die Verbindung N1-N2 keine Datenverluste zur Folge hat. Statt dessen wird mit der Übertragung weiterer Pakete über die Verbindung S-N1 so lange - nämlich genau die Dauer P3 - gewartet, bis die Verbindung N1-N2 wieder für eine weitere Übertragung in der Lage ist.

Für den beschriebenen Fehlerfall gilt allgemein:

$$D3 = RN`/RS \times T$$

$$P3 = (1 - RN`/RS) \times T$$

mit

RN` = verminderte Übertragungskapazität der Verbindung N1-N2,

RN` = a x RN,

a = Faktor der Verminderung,

0 < a < 1.

Die verminderte Übertragungskapazität RN` der Verbindung N1-N2 ergibt sich aus dem Fehler innerhalb des Netzwerks NW und ist nicht bekannt.

Es kann jedoch die Dauer P3 der Pausen pro Zeiteinheit T an dem Eingang N1 und/oder von dem Sender S in dem beschriebenen Fehlerfall gemessen werden. Diese gemessene Dauer P3 für den Fehlerfall des Bereichs III ist größer als die berechnete Dauer P2 für den Grenzfall des Bereichs II.

Die gemessene Dauer P3 für die Pausen pro Zeiteinheit T im Fehlerfall des Bereichs III wird nunmehr als Kriterium für den QoS des Netzwerks NW betrachtet. Da - wie gesagt - die Dauer P3 länger ist als die Dauer P2, kann anhand dieser Differenz auf das Ausmaß der Verminderung der Einhaltung dieses Kriteriums geschlossen werden.

Der Betreiber des Netzwerks NW kann dann in Abhängigkeit von der Dauer P3 und/oder in Abhängigkeit von der Differenz der Dauer P3 und der Dauer P2 eine Entschädigung für den verminderten QoS an den Benutzer des Netzwerks NW bezahlen.

Dies kann auf der Grundlage der folgenden Gleichung berechnet werden:

$$P3 - P2 = (1 - a) \times RN/RS \times T.$$

Setzt man in diese Gleichung die gemessene Dauer P3 des Fehlerfalls und die berechnete Dauer P2 des Grenzfalls ein, so verbleibt als einzige unbekannte Größe der Faktor a für die Verminderung der Übertragungskapazität über die Verbindung N1-N2. Dieser Faktor a kann damit berechnet werden. In Abhängigkeit von diesem Faktor a kann dann der Betreiber des Netzwerks NW die vorgenannte Entschädigung an den Benutzer bezahlen.

**Patentansprüche**

1. Verfahren zur Ermittlung eines Kriteriums für einen sogenannten QoS (QoS = quality of service) eines elektrischen Netzwerks (NW) zur Datenübertragung, bei dem Daten über eine erste Verbindung (S-N1) dem Netzwerk (NW) zugeführt und über eine zweite Verbindung (N1-N2) durch das Netzwerk (NW) hindurchgeführt werden, und bei dem die erste Verbindung (S-N1) eine erste Übertragungskapazität (RS) und die zweite Verbindung (N1-N2) eine zweite Übertragungskapazität (RN, RN`) aufweist, wobei die erste Übertragungskapazität (RS) größer ist als die zweite Übertragungskapazität (RN, RN`), **dadurch gekennzeichnet, dass** das Kriterium für den QoS des Netzwerks (NW) in Abhängigkeit von der Dauer (P2, P3) von Pausen pro Zeiteinheit (T) bei der Übertragung der Daten über die erste Verbindung (S-N1) ermittelt wird.

2. Verfahren nach Anspruch 1, **dadurch gekennzeichnet, dass** es sich bei der zweiten Übertragungskapazität (RN) um eine maximale Übertragungskapazität der zweiten Verbindung (N1-N2) handelt, deren zugehöriger QoS von dem Betreiber des Netzwerks (NW) den Benutzern desselben garantiert wird.

3. Verfahren nach Anspruch 2, **dadurch gekennzeichnet, dass** die Dauer (P2) von Pausen pro Zeiteinheit (T) bei der zweiten maximalen Übertragungskapazität (RN) wie folgt berechnet wird: P2 = (1 - RN/RS) x T mit RN = maximale Übertragungskapazität der Verbindung N1-N2, RS = maximale Übertragungskapazität der Verbindung S-N1,T = Zeiteinheit.

4. Verfahren nach Anspruch 2, **dadurch gekennzeichnet, dass** es sich bei der zweiten Übertragungskapazität (RN`) um eine verminderte Übertragungskapazität der zweiten Verbindung (N1-N2) handelt, deren zugehöriger QoS kleiner ist als der garantierte QoS.

5. Verfahren nach Anspruch 4, **dadurch gekennzeichnet, dass** die Dauer (P3) von Pausen pro Zeiteinheit (T) bei der zweiten verminderten Übertragungskapazität (RN`) gemessen wird.

6. Verfahren nach Anspruch 4, **dadurch gekennzeichnet, dass** von dem Betreiber des Netzwerks (NW) bei Vorliegen des kleineren QoS eine Entschädigung an den Benutzer des Netzwerks (NW) bezahlt wird.

7. Verfahren nach Anspruch 5 und 6, **dadurch gekennzeichnet, dass** die Entschädigung abhängig ist von der gemessenen Dauer (P3) von Pausen pro Zeiteinheit (T) .

8. Verfahren nach Anspruch 7, **dadurch gekennzeichnet, dass** die Entschädigung abhängig ist von der Differenz der gemessenen Dauer (P3) und der berechneten Dauer (P2).

9. Verfahren nach einem der Ansprüche 1 bis 8, **dadurch gekennzeichnet, dass** die Dauer (P2, P3) von Pausen pro Zeiteinheit (T) gemittelt wird.

10. Verfahre nach einem der Ansprüche 1 bis 9, **dadurch gekennzeichnet, dass** die Dauer (P2, P3) von Pausen pro Zeiteinheit (T) zwischen aufeinanderfolgenden Paketen ermittelt wird.

11. Elektrisches Netzwerk (NW) zur Datenübertragung, bei dem Daten über eine erste Verbindung (S-N1) dem Netzwerk (NW) zugeführt und über eine zweite Verbindung (N1-N2) durch das Netzwerk (NW) hindurchgeführt werden, und bei dem die erste Verbindung (S-N1) eine erste Übertragungskapazität (RS) und die zweite Verbindung (N1-N2) eine zweite Übertragungskapazität (RN, RN`) aufweist, wobei die erste Übertragungskapazität (RS) größer ist als die zweite Übertragungskapazität (RN, RN`), **dadurch gekennzeichnet, dass** Mittel vorgesehen sind zur Ermittlung eines Kriteriums für einen sogenannten QoS (QoS = quality of service) des Netzwerks (NW) in Abhängigkeit von der Dauer (P2, P3) von Pausen pro Zeiteinheit (T) bei der Übertragung der Daten über die erste Verbindung (S-N1).

**Fig. 1**

# Fig. 2

EP 1 345 354 A1

**Europäisches Patentamt**

# EUROPÄISCHER RECHERCHENBERICHT

Nummer der Anmeldung

EP 02 36 0085

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 425 202 A (AMERICAN TELEPHONE & TELEGRAPH) 2. Mai 1991 (1991-05-02) <br> * Zusammenfassung * <br> * Abbildungen 2,3 * <br> * Ansprüche 1-8 * <br> * Spalte 3, Zeile 25 - Spalte 4, Zeile 26 * <br> * Spalte 6, Zeile 57 - Spalte 7, Zeile 36 * <br> --- | 1-11 | H04L12/24 <br> H04L12/26 |
| A | "ADAPTIVE RATE CONTROL IN A START/STOP FLOW SYSTEM" <br> IBM TECHNICAL DISCLOSURE BULLETIN, IBM CORP. NEW YORK, US, <br> Bd. 37, Nr. 2A, <br> 1. Februar 1994 (1994-02-01), Seiten 593-594, XP000433457 <br> ISSN: 0018-8689 <br> * das ganze Dokument * <br> --- | 1-11 | |
| A | YANG C-Q ET AL: "A TAXONOMY FOR CONGESTION CONTROL ALGORITHMS IN PACKET SWITCHING NETWORKS" <br> IEEE NETWORK, IEEE INC. NEW YORK, US, <br> Bd. 9, Nr. 4, 1. Juli 1995 (1995-07-01), Seiten 34-45, XP000526590 <br> ISSN: 0890-8044 <br> * das ganze Dokument * <br> --- | 1-11 | **RECHERCHIERTE SACHGEBIETE (Int.Cl.7)** <br> <br> H04L |
| A | US 6 308 216 B1 (TUREK JOHN J E ET AL) 23. Oktober 2001 (2001-10-23) <br> * Zusammenfassung * <br> * Ansprüche 1,5,11,16,19 * <br> * Spalte 1, Zeile 33-59 * <br> * Spalte 6, Zeile 11-34 * <br> ----- | 1-11 | |

Der vorliegende Recherchenbericht wurde für alle Patentansprüche erstellt

| Recherchenort | Abschlußdatum der Recherche | Prüfer |
|---|---|---|
| DEN HAAG | 5. September 2002 | Cichra, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**　　　EP 02 36 0085

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-09-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0425202 | A | 02-05-1991 | US | 5067074 A | 19-11-1991 |
| | | | CA | 2024305 A1 | 28-04-1991 |
| | | | DE | 69027395 D1 | 18-07-1996 |
| | | | DE | 69027395 T2 | 23-01-1997 |
| | | | EP | 0425202 A2 | 02-05-1991 |
| | | | JP | 3033781 B2 | 17-04-2000 |
| | | | JP | 3153149 A | 01-07-1991 |
| US 6308216 | B1 | 23-10-2001 | KEINE | | |

EPO FORM P0461

Für nähere Einzelheiten zu diesem Anhang : siehe Amtsblatt des Europäischen Patentamts, Nr.12/82